# EUROPÄISCHE PATENTSCHRIFT

(11) **EP 1 931 523 B1**
(45) Veröffentlichungstag und Bekanntmachung des Hinweises auf die Patenterteilung: **15.01.2014**
(21) Anmeldenummer: 06805785.0
(22) Anmeldetag: 20.09.2006
(51) Int. Cl.: B42D 15/10, G06K 19/077, G06K 19/08

(54) **SICHERHEITSDOKUMENT**
SECURITY DOCUMENT
DOCUMENT DE SECURITE

(30) Priorität: 06.10.2005 DE 102005048033
(43) Veröffentlichungstag der Anmeldung: 18.06.2008
(73) Patentinhaber: Bundesdruckerei GmbH, 10958 Berlin (DE)
(72) Erfinder: KUHN, Christian, 75005 Paris (FR)
(74) Vertreter: Leske, Thomas
(86) Internationale Anmeldenummer: PCT/EP2006/009158
(87) Internationale Veröffentlichungsnummer: WO 2007/039116

(56) Entgegenhaltungen:
- WO-A2-03/096384
- DE-A1- 10 150 194

## Beschreibung

Die Erfindung betrifft ein Sicherheitsdokument mit einem grafischen Muster zur visuellen Wiedergabe von personen- und/oder produktbezogenen Daten, das mindestens ein Bild und/oder Textdaten umfasst, gemäß den Merkmalen des Anspruchs 1.

Die Erfindung betrifft des weiteren ein Sicherheitsdokument mit einem grafischen Muster gemäß den Merkmalen des Anspruchs 2.

Sicherheitsdokumente, wie Personalausweise, Reisepässe, Identitätskarten, Banknoten, aber auch manche Produktlabel müssen personen- und/oder produktbezogene Daten enthalten, die zumindest visuell und gegebenenfalls auch maschinell lesbar sind und eine Identifizierung der jeweiligen Person oder des Produkts ermöglichen. So ist auf Personaldokumenten üblicherweise eine Passbild sowie alphanumerischer Text aufgedruckt, der Personalisierungsdaten enthält. Diese Information wird bspw. mit üblichen Druckverfahren, mit Ink-jet- oder Laserdruckverfahren aufgebracht.

Einschlägige Dokumente enthalten darüber hinaus in der Regel Vielzahl von Sicherheitsmerkmalen, die Fälschungen und Manipulationen am Inhalt des Dokuments und dessen Missbrauch verhindern sollen. Solche Sicherheitsmerkmale sind bspw. Mikroschriften, Sicherheitsdrucke mit mehrfarbigen Guillochen, also Schutzmustern aus feinen, miteinander verschlungenen Linien, sowie Fluoreszenzmarkierungen, Wasserzeichen, Laserdrucke, Hologramme u.v.a. Insbesondere werden Sicherheitsdokumente durch Chipmodule mit ICs geschützt und mit Transpondern ausgestattet, um sie maschinell mit RFID-Technik auslesen zu können.

Bekannt ist (JP 04045567 A; US 2003/0059987 A1) die Herstellung von elektronischen Schaltelementen und integrierten Schaltungen auf drucktechnischem Wege mit entsprechenden leitfähigen Farben und halbleitenden Tinten und insbesondere mit polymeren Halbleitern. Auf diese Weise lassen sich flexible ICs auf Papier oder papierähnlichen Substraten anbringen.

Bekannt ist bspw. auch (DE 198 12 826 C1; US 6 345 104 B1) Geheiminformation in Bildern zu verschlüsseln. Die Information wird dabei bestimmten Bildpunkten nach einem vorgegebenen Algorithmus überlagert, ohne dass der optische Gesamteindruck visuell erkennbar verändert wird, eine Methode, die auch digitales Wasserzeichen oder Steganografie (Lehre vom verdeckten Schreiben) genannt wird. Mit ihr können bspw. geheime Nachrichten durch Bilder übermittelt, die Urheberschaft nachgewiesen und die Fälschungssicherheit von Dokumenten erhöht werden.

In der DE 103 17 292 A1 ist ein Sicherheitsdokument beschrieben, bei dem grafische Muster mittels elektrisch leitfähiger Farbe auf einen Datenträger aufgebracht sind. Die grafischen Muster können hierbei künstlerische Motive umfassen, wie beispielsweise Personen-, Tier-, Landschafts- oder Bauwerkportraits und sind visuell erfassbar. Die grafischen Muster bestehen aus Grafikelementen, wie etwa Linien, die Leiterbahnen bilden und die als Antenne oder als Teile von elektronischen Bauelementen dienen können. Letztere können als FET (Feldeffekttransistoren) ausgebildet sein, die bevorzugt an Kreuzungspunkten von Grafikelementen drucktechnisch erzeugt sind. Das grafische Muster kann hierbei insgesamt als elektronischer Schaltkreis oder zumindest als Teil davon dienen.

Die DE 101 50 194 A1 betrifft eine Chipkarte in deren Chipkartenkörper eine elektrische Leiterbahn integriert ist. Diese Leiterbahn ist als Spule oder Antenne ausgebildet und weist zumindest in einem Abschnitt eine Lagecodierung auf. Die Lagecodierung kann durch den Verlauf der Leiterbahn, auch in mehreren Ebenen, bestimmt sein und ist über ein

Lesegerät erfassbar. Das Lesegerät ist hierfür mit einem Messwertaufnehmer ausgestattet, der es erlaubt, die Lage oder Impedanz der von der Leiterbahn gebildeten Spule zu erfassen. Diese Daten können zudem in einem chipkarteneigenen Informationsträger gespeichert und über ein Lesegerät abrufbar sein. Die Leiterbahnen sind über verschiedene Druckverfahren aufbringbar, wofür unter anderem auch elektrisch leitfähige Pasten einsetzbar sind.

Die WO 03/096384 A2 befasst sich mit verschiedenartigen elektrisch leitfähigen Tinten, die beispielsweise für die Herstellung von gedruckten Leiterplatten einsetzbar sind. Erwähnt sind auch durchsichtige Tinten, die drucktechnisch aufgebracht als Antennen von Chipkarte oder von elektrisch berührungslos abfragbaren Etiketten dienen können.

Die vorliegende Erfindung hat die weitere Verbesserung der Fälschungssicherheit einschlägiger Dokumente zum Ziel. Dieses Ziel wird erfindungsgemäß durch ein Sicherheitsdokument mit allen Merkmalen des Anspruchs 1 oder des Anspruchs 2 erreicht.

Das grafische Muster kann somit mit dem unbewaffneten Auge überprüft werden, zugleich ist in dem Muster aber eine visuell nicht erkennbare elektromagnetische Kennung enthalten, die zur Authentifikation herangezogen werden kann.

Das grafische Muster ist aus elektrisch leitfähigem und/oder halbleitendem Material aufgedruckt. Ebenso kommen Biomaterialien in Frage. Damit können auf drucktechnischem Wege jedem einzelnen Muster bzw. jeder Linie, jeder Zahl, jedem Buchstaben unterschiedliche elektromagnetische Kennungen zugeordnet werden. Auf diese Weise läßt sich auf dem Sicherheitsdokument ein zusätzlicher, nicht direkt erkennbarer Code ablegen.

Erfindungsgemäß wird das grafische Muster auf dem Sicherheitsdokument in Form eines Linienrasters aufgebracht. Dies hat den Vorteil, dass sich die Herstellung sehr günstig gestaltet, weil man herkömmliche Druckvorgänge durch den Druckalgorithmus, d.h. geeignete Rechenvorschriften entsprechend steuern kann. Als herkömmliche Druckvorgänge kommen z.B. Siebdruck, Tiefdruck, Offsetdruck, Inkjetdruck aber auch Laserdruck in Betracht. Denkbar sind darüber hinaus NegativVerfahren, bei denen auf bspw. eine Karte eine Folie aus dem aufzutragenden Material gelegt wird und das Negativ des zu druckenden Bildes und/oder Textes weggeätzt oder weggelasert wird.

Wenn die Linien entsprechend fein und nah aneinander gedruckt werden, ergibt sich eine zusätzliche Sicherheitsstufe dadurch, dass das Nachahmen technisch sehr aufwendig ist, weil jede bei einer Fälschung oder Kopie auftretende Berührung der Linien zu einer Veränderung der elektromagnetischen Kennung, bspw. zu einem Kurzschluss führt.

Bei einem Linienraster ist es von Vorteil, dass die einzelnen Linien mit unterschiedlichen Druckfarben, die sich also in ihrer chemischen Zusammensetzung und/oder im Farbton unterscheiden, gedruckt werden können. Auch dies erschwert Fälschungsversuche zusätzlich, weil die jeweilige Druckfarbe und ihre Verknüpfung mit der elektromagnetischen Kennung, bspw. dem Leitfähigkeitsmuster nur durch den Druckalgorithmus bekannt ist, und so einen weiteren Sicherheitscode darstellt.

Die elektromagnetische Kennungen, bspw. die unterschiedlichen Leitfähigkeiten können durch die Zusammensetzung oder Konzentration der Farbe, die Form der gedruckten Motive, also deren Breite, Länge und Dicke bestimmt sein. Dabei kann normale Druckfarbe mit leitfähigen Zusätzen verwendet werden, so dass zugleich auch die bekannten Sicherheitsmerkmale von Farben mit eingesetzt werden können. Die Farbe kann dabei auch erst nach der Herstellung aktiviert werden. Wenn man bspw. die Linien während der Produktion nur zum Teil aktiviert, besteht die Möglichkeit die finale Aktivierung durch eine zertifizierte Stelle, wie bspw. das Einwohnermeldeamt vornehmen zu lassen, wobei ein Schlüssel mit übergeben wird, welche Linien bereits aktiviert sind, und welche Linien erst noch aktiviert werden müssen.

Die Linien des Linienrasters können im wesentlichen parallel angeordnet sein, wobei zumindest auf einer Seite des Bildes eine Treiberschaltung vorgesehen ist, die bspw. als gedruckte Schaltung aus Polymerelektronik, Halbleitermaterialien und/oder dielektrischen Materialien ausgebildet ist. Die einzelnen Linien können auch in serieller Anordnung mäanderförmig, in fortgesetzter S-Form, untereinander verbunden sein und bspw. eine Antenne bilden, deren Eigenschaften bei geeigneter Anregung ausgelesen werden.

Anstelle herkömmlicher Druckverfahren können die grafischen Muster auch mit dem Laser als leitfähige Strukturen eingeschrieben sein oder durch Laserbestrahlung aktiviert werden. Dabei ist es insbesondere denkbar, dass zwischen den Linien des grafischen Musters und einem Chip weitere elektronische Bauelemente vorgesehen sind, die durch einen Laser aktiviert und/oder individualisiert werden.

Bevorzugt wird als vorbestimmte elektromagnetische Eigenschaft das elektrische Leitfähigkeitsmuster herangezogen. Ebenso lassen sich aber auch das induktive oder das kapazitive Verhalten oder das Frequenzverhalten als eingeprägte Kennung verwenden. Das grafische Muster kann hierzu insbesondere in mehreren Schichten übereinander gedruckt sein (sog. 3-D-Drucken), wobei vorzugsweise dielektrische Zwischenschichten, bspw. in Form eines dielektrischen Films oder einer Folie, vorgesehen werden, die in unterschiedlicher Dicke und/oder Breite aufgetragen werden, so dass bspw. auch unterschiedliche Leitfähigkeiten mit unterschiedlichen Kapazitäten kombiniert werden können.

Besonders vorteilhaft ist, dass sich die Linien des Linienrasters mit einem im Sicherheitsdokument enthaltenen Chipmodul mit integriertem Schaltkreis verbinden lassen, wobei der integrierte Schaltkreis des Chipmoduls die Information über die vorbestimmten elektromagnetischen Eigenschaften des grafischen Musters, also den Sicherheitscode enthält, der zur Entschlüsselung der im grafischen Muster enthaltenen elektromagnetischen Information erforderlich ist. Es ist auch möglich, den Code in einer zentralen Datenbank abzulegen. Zum Zeitpunkt der Verifikation werden dann die Daten aus dem Sicherheitsdokument ausgelesen und mit denen in der Datenbank verglichen. Dabei können die Informationen aus dem Sicherheitsdokument vom Chip durch RFID Technologie oder direkt über einen Kontakt aus dem Chip ausgelesen werden.

Weitere Merkmale und Vorteile der Erfindung ergeben sich aus der nachfolgenden Beschreibung von Ausführungsbeispielen.

Es zeigen:
- Fig. 1:: Einen Identitätsausweis nach der Erfindung
- Fig. 2:: Die Ausbildung des Linienbildes als Antenne
- Fig: 3:: Das Linienbild mit parallelen Linien und mit Treiber-Elektronik
- Fig. 4:: Ein RFID-fähiges Ausführungsbeispiel
- Fig. 5:: Ein weiteres Ausführungsbeispiel mit einem in mehrfarbigen Linien gedruckten Muster
- Fig. 6:: Ein Ausführungsbeispiel mit einem in mehreren Schichten aufgedruckten gräfischen Muster

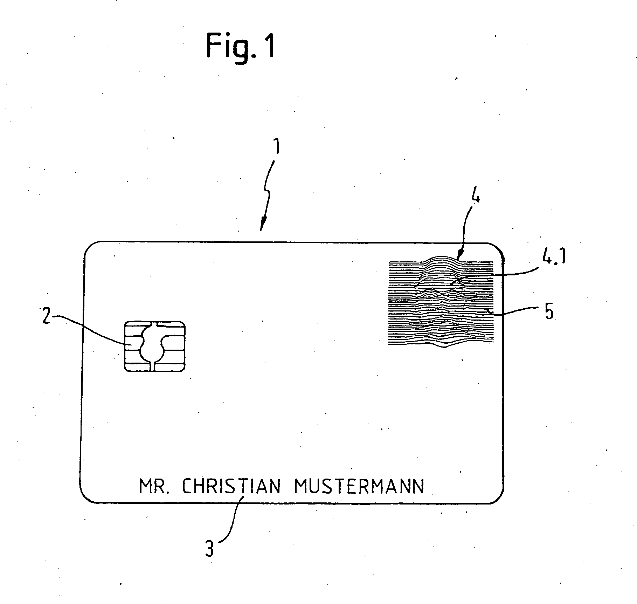

In Figur 1 ist ein Sicherheitsdokument 1 nach der Erfindung in Form einer ID-Karte dargestellt. Die Karte besteht aus einem Papier-Kunststoff Lamininat, in dem auch ein Chipmodul 2 untergebracht ist, das Personalisierungsdaten des Karteninhabers enthält und als kontaktbehaftetes, als RFID oder als Dual-Interface Modul ausgebildet sein kann. Die Personalisierdaten sind zumindest in Teilen auch auf der Karte in Personalisierungszeilen 3 aufgedruckt, von denen in Fig 1 nur eine, stellvertretend für eine Mehrzahl, dargestellt ist. Ein grafisches Muster 4, hier ein Portrait 4.1 ist als Linienraster 5 auf der Karte aufgedruckt. Die Linien des Rasters bestehen aus leitfähiger Farbe. Bei der Herstellung wird der Druckvorgang dabei durch eine Rechenvorschrift, dem Druckalgorithmus, so gesteuert, dass das Linienraster 5 ein charakteristisches Leitfähigkeitsmuster ergibt, das ausgelesen und zur Authentifizierung des Dokuments herangezogen werden kann. Anstelle des Leitfähigkeitsmusters können auch andere elektromagnetische Eigenschaften eingeschrieben werden, wie bspw. Güte, Leistung sowie induktives, kapazitives oder Frequenzverhalten bei entsprechender elektromagnetischer Anregung. Im gezeigten Beispiel ist es das Portraitbild des Dokumenteninhabers, das so aufgedruckt ist, dass es bei entsprechender Anregung eine vorbestimmte elektromagnetische Antwort ausgibt. In gleicher Weise können aber auch die aufgedruckten alphanumerischen Zeichen und die sonstigen auf der Karte befindlichen grafischen Muster mit einer entsprechenden elektromagnetischen Kennung versehen werden.

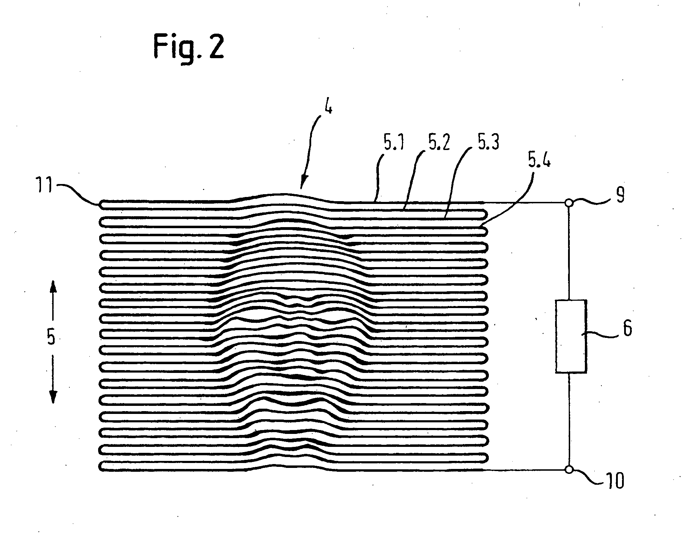

Die Figur 2 zeigt stark vergrößert und schematisch eine Ausführungsform für das Linienraster 5 des aufgedruckten Portraits 4.1. Die jeweiligen Enden 11 der aufgedruckten Linien 5.1, 5.2, 5.3, 5.4 u.s.w. sind hier mäanderförmig miteinander verbunden, d.h. die Linien·sind seriell geschaltet. Das Muster bildet so eine Antenne, die auf entsprechende Anregung eine Antwort liefert, die über die im Sicherheitsdokument integrierte Logikschaltung 6 ausgewertet wird. Die Logikschaltung 6 ist dabei über die Kontakte 9 und 10 mit Anfang und Ende des Linienrasters 5 verbunden. Grundsätzlich ist es aber auch möglich, die im grafischen Muster versteckte Information kontaktlos auszulesen.

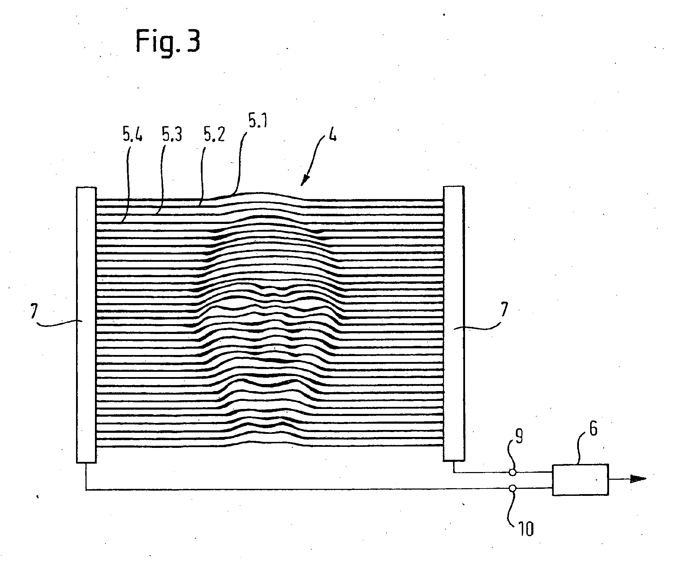

In Figur 3 ist eine andere Ausführungsform dargestellt, bei der die Linien 5.1, 5.2, 5.3, 5.4 u.s.w. mit unterschiedlicher Leitfähigkeit aufgedruckt sind. Beiderseits des grafischen Musters sind aus polymeren Halbleitern aufgebaute Treiberschaltungen 7 vorgesehen, die ebenfalls im Dokument integriert sind. Die Treiber 7 sind wiederum über die Kontakte 9 und 10 mit der Logikschaltung 2 verbunden. Die Linien 5.1, 5.2, 5.3, 5.4 u.s.w. sind hier parallel geschaltet. Die Treiber sind dabei so aufgebaut, dass die Enden jeder Linie kontaktiert sind. Somit ist es möglich die Linien einzeln oder gemeinsam auszulesen.

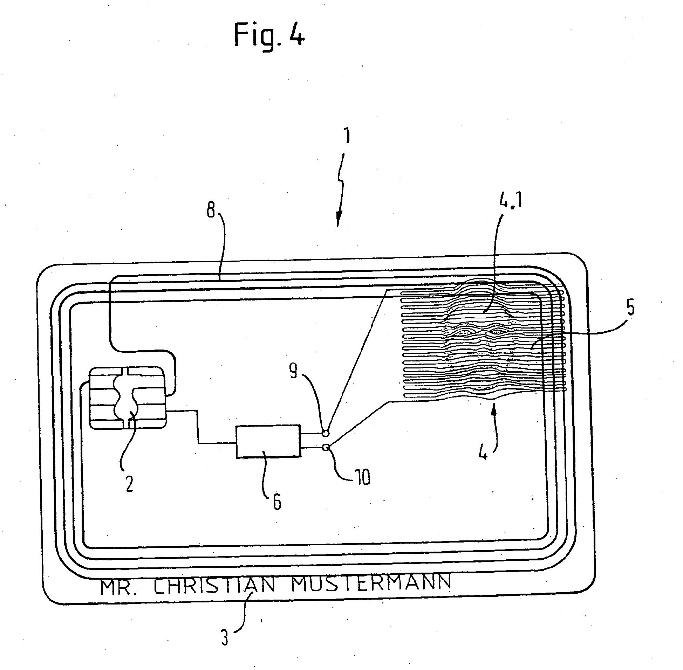

Figur 4 zeigt ein Sicherheitsdokument 1 in der Ausführungsform einer RFID-fähigen ID-Karte bzw. eines Personalausweises. Er enthält einen Chipmodul 2, das über eine Antenne 8 beschreib- bzw. auslesbar und entsprechend kryptografisch abgesichert ist. Die Antenne 8 kann dabei als Drahtspule im Papier-Kunststof-Laminat eingelagert oder mit leitfähiger Druckfarbe aufgedruckt sein. Der Ausweis ist mit einem Portrait 4.1 des Inhabers bedruckt, das rastermäßig, wie bspw. in den Figuren 2 und 3 dargestellt, aus Linien mit einer charakteristische elektromagnetische Kennung aufgebaut ist. Diese Kennung wird von der Logikschaltung 6 übernommen, die an den Kontakten 9, 10 mit dem Linienraster in Verbindung steht. Die Logikschaltung 6 ist andererseits mit dem integrierten Schaltkreis des Chipmoduls 2 verbunden, der die Dekodierung in Teilen oder zur Gänze übernimmt. Die an den verschiedenen Stellen, Chipmodul 2, Personalisierungszeilen 3, Passbild 4.1 u.s.w. gespeicherten Informationen sind miteinander verknüpft, was evtl. Manipulationsversuche erheblich erschwert.

Hier sind je nach Anwendungsfall verschiedene Varianten möglich. So kann für die Dekodierung eine eigene Schaltung vorgesehen werden, die dann zwischen Logikschaltung 6 und Chipmodul 2 eingesetzt ist. Grundsätzlich kann aber die gesamte Auswertung auch vom integrierten Schaltkreis des Chipmoduls selbst übernommen werden, der dann direkt mit dem Raster des grafischen Musters verbunden ist, wobei eine eigene Logikschaltung im Sinne eines separaten Schaltungsteils entfällt. Eine zweckmäßige Ausbildung kann auch darin bestehen, die Dekodierung nicht im Dokument sondern extern durch das Lesegerät vorzusehen.

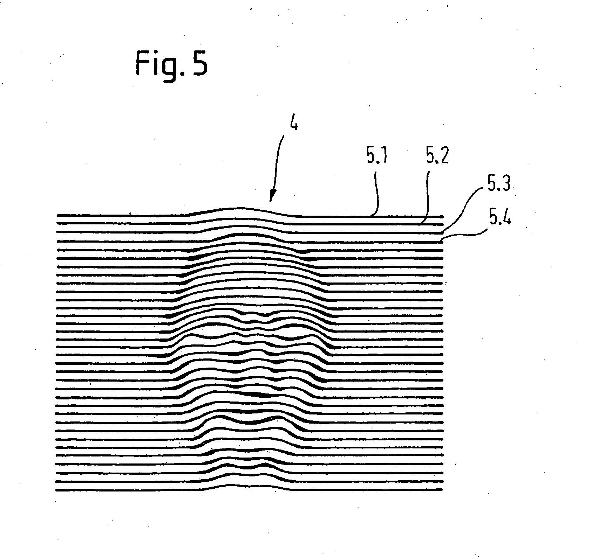

Fig. 5 zeigt ein weiteres Ausführungsbeispiel nach der Erfindung. Das Portrait des Dokumenteninhabers ist aus mit leitfähiger Farbe aufgedruckten Linien aufgebaut, wobei diese Linien 5.1, 5.2, 5.3, 5.4 u.s.w. aus unterschiedlichen Druckfarben bestehen, die ebenso wie die jeweiligen Leitfähigkeiten durch den vorgegebenen Druckalgorithmus vorbestimmt sind. Hierdurch, insbesondere durch die Verknüpfung mit der jeweiligen Leitfähigkeit ergibt sich eine weitere Sicherheitsstufe, die Fälschungen weitgehend unmöglich macht, weil die Zuordnung zwischen Druckfarbe und Leitfähigkeit nur über den Druckalgorithmus bekannt ist.

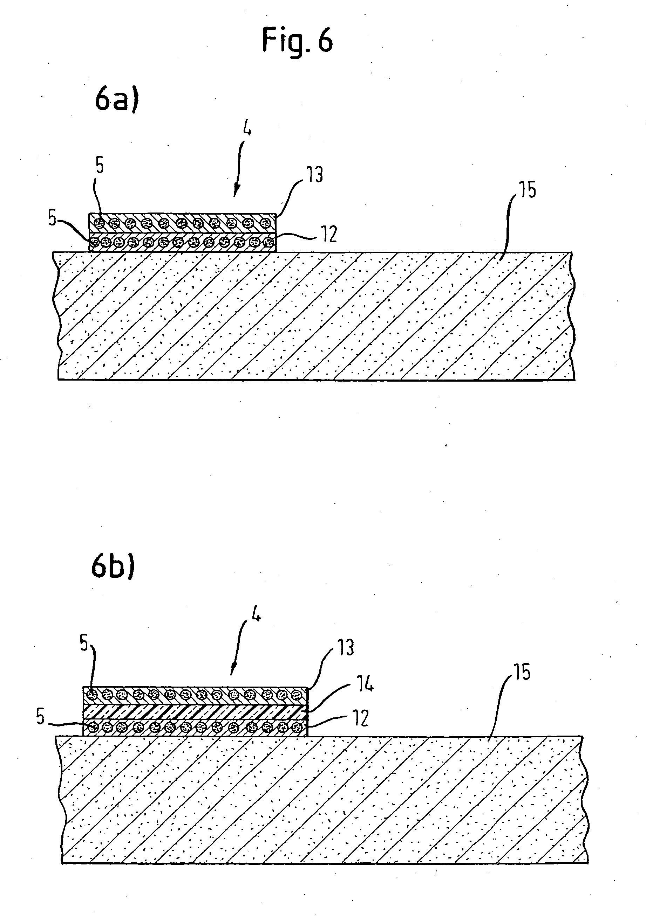

Fig. 6 zeigt ein weiteres Ausführungsbeispiel mit einem in mehreren Schichten aufgedruckten Muster schematisch im Querschnitt. Im Fall der Figur 6a befindet sich auf dem Substrat 11 zwei aufgedruckte Schichten 12, 13, die jeweils aus einem Muster mit Linien 5 (hier quergeschnitten) im Sinne der Figuren 1 bis 5 bestehen, und damit soz. eine dreidimensionale Struktur ergeben. In Figur 6a ist das Substrat 11 mit einer ersten Schicht 11 mit einem Linienmuster 5 bedruckt. Darüber befindet sich eine Zwischenschicht 14 in Form eines dielektrischen Films, auf den wiederum eine zweite Schicht 13 mit einem Muster aus leitfähigen oder halbleitenden Material, hier in Form eines Linienrasters 5 aufgedruckt ist. Die Zwischenschicht 14 kann unterschiedliche Dicken und Breiten aufweisen, so dass sich nicht nur unterschiedliche Leitfähigkeiten sondern auch unterschiedliche Kapazitäten ergeben, die zur Kennung herangezogen werden können.

Die Überprüfung, ob ein Dokument echt ist, erfolgt in den dargestellten Beispielen über einen im Sicherheitsdokument vorhandenen Chipmodul, bspw. einen bekannten RFID-Chip oder über eine aus Polymerelektronik bestehende Schaltung. Dabei bestehen zwei Möglichkeiten. Der Chipmodul kann den Sicherheitscode, also bspw. die Information über das Leitfähigkeitsmuster enthalten. Bei der Überprüfung können nun einerseits das Motiv mit den unterschiedlichen Leitfähigkeiten erfasst und andererseits der Chip ausgelesen werden. Durch Vergleich beider Informationen kann festgestellt werden, ob das Dokument echt ist. Ebenso ist es möglich, der Chip nur zum Auslesen der in den gedruckten Motiven versteckten Information eingesetzt wird. Diese Information ist durch den Sicherheitscode an einer anderen Stelle, bspw. im Lesegerät abgelegt. In diesem Falle wird die auf dem Sicherheitsdokument in den gedruckten Motiven enthaltene Information mit dem extern abgelegten Sicherheitscode verglichen, um herauszufinden, ob es sich um eine Original oder eine Fälschung handelt.

Die erfindungsgemäße Ausbildung des Sicherheitsdokuments bietet insbesondere die Möglichkeit, die an den verschiedenen Stellen des Dokuments und in verschiedenen Sicherheitsstrukturen eingebundenen Informationen noch stärker miteinander zu verknüpfen und so Manipulationsversuche noch stärker zu unterbinden.

## Patentansprüche

1. Sicherheitsdokument mit einem grafischen Muster (4) zur visuellen Wiedergabe von personen- und/oder produktbezogenen Daten, das mindestens ein Bild und/oder Textdaten umfasst, wobei das grafische Muster (4) aus elektrisch leitfähigem und/oder halbleitenden Material aufgedruckt ist,
**dadurch gekennzeichnet,**
**dass** das grafische Muster (4) mit einem vorbestimmten Druckalgorithmus derart auf das Sicherheitsdokument (1) aufgebracht ist, dass es eine durch den Druckalgorithmus vorbestimmte elektromagnetische Eigenschaft enthält, wie das elektrische Leitfähigkeitsmuster, das induktive oder das kapazitive Verhalten oder das Frequenzverhalten des grafischen Musters (4), welche Eigenschaft über eine im Sicherheitsdokument (1) enthaltene Logikschaltung (6) auslesbar ist und dass das grafische Muster (4) als Druckraster in Form eines Linienrasters (5) auf das Sicherheitsdokument (1) aufgebracht ist und die Linien (5.1, 5.2, 5.3, 5.4) des Linienrasters (5) mäanderförmig untereinander verbunden oder parallel geschaltet sind.

2. Sicherheitsdokument mit einem grafischen Muster (4), das mittels einer elektrisch leitfähigen, für das menschliche Auge transparenten, und somit unsichtbaren Farbe auf das Sicherheitsdokument (1) aufgebracht ist,
**dadurch gekennzeichnet,**
**dass** das grafische Muster (4) eine durch einen Druckalgorithmus vorbestimmte elektromagnetische Eigenschaft enthält, wie das elektrische Leitfähigkeitsmuster, das induktive oder das kapazitive Verhalten oder das Frequenzverhalten des grafischen Musters (4), welche Eigenschaft über eine im Sicherheitsdokument (1) enthaltene Logikschaltung (6) auslesbar ist,
**dass** das grafische Muster (4) als Druckraster in Form eines Linienrasters (5) auf das Sicherheitsdokument (1) aufgebracht ist und die Linien (5.1, 5.2, 5.3, 5.4) des Linienrasters (5) mäanderförmig untereinander verbunden oder parallel geschaltet sind.

3. Sicherheitsdokument nach Anspruch 1 oder 2, wobei die Linien (5.1, 5.2, 5.3, 5.4) des Linienrasters (5) unterschiedliche Druckfarben aufweisen.

4. Sicherheitsdokument nach Anspruch 1, 2 oder 3, wobei zumindest auf einer Seite des grafischen Musters (4) die Enden (11) der Linien (5.1, 5.2, 5.3, 5.4) mit einer Treiberschaltung (7) verbunden sind.

5. Sicherheitsdokument nach einem der Ansprüche 1 bis 4, wobei das Linienraster (5) als Antenne ausgebildet ist.

6. Sicherheitsdokument nach einem der Ansprüche 1 bis 5, wobei das grafische Muster (4) in mehreren Schichten (12, 13) übereinander als dreidimensionale Struktur aufgedruckt ist.

7. Sicherheitsdokument nach einem der Ansprüche 1 bis 6, wobei das grafische Muster (4) in eine Schicht mit einem Laser als Leitfähigkeitsstruktur eingeschrieben ist.

8. Sicherhensdokument nach Anspruch 6, wobei zwischen den übereinander liegenden Schichten (12, 13) zumindest eine dielektrische Schicht (14), insbesondere ein dielektrischer Film vorgesehen ist.

9. Sicherheitsdokument nach einem der Ansprüche 1 bis 8, wobei das grafische Muster (4) mit einem im Sicherheitsdokument (1) enthaltenen Chipmodul (2) mit integriertem Schaltkreis verbunden ist.

10. Sicherheitsdokument nach Anspruch 9, wobei der integrierte Schaltkreis des Chipmoduls (2) die Information über die vorbestimmten elektromagnetischen Eigenschaften des grafischen Musters (4) enthält.

## Claims

1. Security document having a graphic pattern (4) for visual reproduction of personal and/or product-related data, which comprises at least one image and/or text data, the graphic pattern (4) being imprinted from electrically conductive and/or semiconducting material, **characterized in that** the graphic pattern (4) with a predetermined printing algorithm is applied to the security document (1) in such a way that it includes an electromagnetic property predetermined by the printing algorithm such as the electrical conductivity pattern, the inductive or the capacitive behaviour or the frequency response of the graphic pattern (4), which property can be read out via a logic circuit (6) included in the security document (1), and **in that** the graphic pattern (4) is applied to the security document (1) as a printing grid in the form of a line grid (5), and the lines (5.1, 5.2, 5.3, 5.4) of the line grid (5) are interconnected in a meandering fashion or are connected in parallel.

2. Security document having a graphic pattern (4) which is applied to the security document (1) by means of an electrically conductive colour which is transparent to the human eye and therefore invisible, **characterized in that** the graphic pattern (4) includes an electromagnetic property predetermined by a printing algorithm, such as the electrical conductivity pattern, the inductive or the capacitive behaviour, or the frequency response of the graphic pattern (4), which property can be read out via a logic circuit (6) included in the security document (1), **in that** the graphic pattern (4) is applied to the security document (1) as a printing grid in the form of a line grid (5), and the lines (5.1, 5.2, 5.3, 5.4) of the line grid (5) are interconnected in a meandering fashion or are connected in parallel.

3. Security document according to Claim 1 or 2, in which the lines (5.1, 5.2, 5.3, 5.4) of the line grid (5) have different printing colours.

4. Security document according to Claim 1, 2 or 3, in which the ends (11) of the lines (5.1, 5.2, 5.3, 5.4) are connected to a driver circuit (7) at least on one side of the graphic pattern (4).

5. Security document according to one of Claims 1 to 4, in which the line grid (5) is designed as an antenna.

6. Security document according to one of Claims 1 to 5, in which the graphic pattern (4) is imprinted in a plurality of layers (12, 13) one above the other as a three-dimensional structure.

7. Security document according to one of Claims 1 to 6, in which the graphic pattern (4) is written into a layer with the aid of a laser as a conductivity structure.

8. Security document according to Claim 6, in which at least one dielectric layer (14), in particular a dielectric film, is provided between the layers (12, 13) lying one above the other.

9. Security document according to one of Claims 1 to 8, in which the graphic pattern (4) is connected to an integrated circuit with the aid of a chip module (2) included in the security document (1).

10. Security document according to Claim 9, in which the integrated circuit of the chip module (2) includes the information relating to the predetermined electromagnetic properties of the graphic pattern (4).

## Revendications

1. Document sécurisé présentant un motif graphique (4) reproduisant visuellement des données concernant des personnes et/ou des produits et comprenant au moins une image et/ou des données de texte, le motif graphique (4) étant imprimé en un matériau électriquement conducteur et/ou en un matériau semi-conducteur,
**caractérisé en ce que**
le motif graphique (4) est appliqué sur le document sécurisé (1) à l'aide d'un algorithme d'impression prédéterminé de telle sorte qu'il présente une propriété électromagnétique définie par l'algorithme d'impression, par exemple le motif de conductivité électrique, le comportement inductif ou capacitif ou le comportement en fréquence du motif graphique (4), la propriété pouvant être lue par l'intermédiaire d'un circuit logique (6) que contient le document sécurisé (1),
**en ce que** le motif graphique (4) est appliqué sur le document sécurisé (1) en tant que trame d'impression en forme de trame (5) de lignes et
**en ce que** les lignes (5.1, 5.2, 5.3, 5.4) de la trame (5) de lignes sont reliées les unes aux autres en forme de méandres ou sont raccordées en parallèle.

2. Document sécurisé présentant un motif graphique (4) appliqué au moyen d'une encre électriquement conductrice transparente pour l'oeil humain et donc invisible sur le document sécurisé (1),
**caractérisé en ce que**
le motif graphique (4) est appliqué sur le document sécurisé (1) à l'aide d'un algorithme d'impression prédéterminé de telle sorte qu'il présente une propriété électromagnétique définie par l'algorithme d'impression, par exemple le motif de conductivité électrique, le comportement inductif ou capacitif ou le comportement en fréquence du motif graphique (4), la propriété pouvant être lue par l'intermédiaire d'un circuit logique (6) que contient le document sécurisé (1),
**en ce que** le motif graphique (4) est appliqué sur le document sécurisé (1) en tant que trame d'impression en forme de trame (5) de lignes et
**en ce que** les lignes (5.1, 5.2, 5.3, 5.4) de la trame (5) de lignes sont reliées les unes aux autres en forme de méandres ou sont raccordées en parallèle.

3. Document sécurisé selon les revendications 1 ou 2, dans lequel les lignes (5.1, 5.2, 5.3, 5.4) de la trame (5) de lignes présentent différentes encres d'impression.

4. Document sécurisé selon les revendications 1, 2 ou 3, dans lequel au moins sur un côté du motif graphique (4), les extrémités (11) des lignes (5.1, 5.2, 5.3, 5.4) sont reliées à un circuit pilote (7).

5. Document sécurisé selon l'une des revendications 1 à 4, dans lequel la trame (5) de lignes est configurée comme antenne.

6. Document sécurisé selon l'une des revendications 1 à 5, dans lequel le motif graphique (4) est imprimé en plusieurs couches (12, 13) superposées sous la forme d'une structure tridimensionnelle.

7. Document sécurisé selon l'une des revendications 1 à 6, dans lequel le motif graphique (4) est inscrit au laser en une couche qui sert de structure de conductivité.

8. Document sécurisé selon la revendication 6, dans lequel au moins une couche diélectrique (14), en particulier un film diélectrique, est prévue entre les couches (12, 13) superposées.

9. Document sécurisé selon l'une des revendications 1 à 8, dans lequel le motif graphique (4) est relié à un module de puce (2) doté d'un circuit intégré et contenu dans le document sécurisé (1).

10. Document sécurisé selon la revendication 9, dans lequel le circuit intégré du module de puce (2) contient les informations sur les propriétés électromagnétiques prédéterminées du motif graphique (4).
